# FASCICULE DE BREVET EUROPEEN

(11) **EP 2 005 710 B1**
(45) Date de publication et mention de la délivrance du brevet: **24.04.2019**
(21) Numéro de dépôt: 07731621.4
(22) Date de dépôt: 13.02.2007
(51) Int. Cl.: H04L 29/08

(54) **PROCEDE ET SYSTEME DE GESTION DYNAMIQUE DE TRANSMISSION DE FLUX AU SEIN D'UNE PLURALITE DE TERMINAUX**
VERFAHREN UND SYSTEM ZUR DYNAMISCHEN VERWALTUNG DER ÜBERTRAGUNG VON STRÖMEN INNERHALB MEHRERER ENDGERÄTE
METHOD AND SYSTEM FOR THE DYNAMIC MANAGEMENT OF THE TRANSMISSION OF STREAMS WITHIN A PLURALITY OF TERMINALS

(30) Priorité: 16.02.2006 FR 0650556
(43) Date de publication de la demande: 24.12.2008
(73) Titulaire: Orange, 75015 Paris (FR)
(72) Inventeur: BESOMBE, Philippe, F-22700 Louannec (FR); COLLIN, Guillaume, F-22290 Goudelin (FR); TOUTAIN, François, F-22700 Louannec (FR)
(74) Mandataire: Cabinet Beau de Loménie
(86) Numéro de dépôt international: PCT/FR2007/050796
(87) Numéro de publication internationale: WO 2007/093739

(56) Documents cités:
- US-A1- 2004 057 449
- US-A1- 2004 185 838

## Description

La présente invention concerne un procédé de transmission de données représentatives d'au moins un stimulus d'au moins un type déterminé et incluses dans un flux conforme à un format associé audit type déterminé, lequel flux étant destiné à être reçu par un dispositif d'interface connecté à une pluralité de terminaux.

De tels procédés sont couramment mis en oeuvre dans des systèmes de transmission de flux de données représentatives de stimuli de type audio et/ou vidéo, lesquels flux pouvant ainsi par exemple véhiculer des données représentatives d'oeuvres cinématographiques, ou encore de téléconférences se déroulant alors en principe en temps réel.

Selon une tendance de fond produisant des effets apparents notamment dans l'industrie des télécommunications, des données de divers types ont de plus en plus souvent vocation à être véhiculées au moyen d'une infrastructure commune, qui met usuellement en oeuvre un ou plusieurs réseaux de communication, par exemple un réseau principal conforme au protocole Internet coopérant avec un ou plusieurs réseaux auxiliaires qui pourront être matérialisés par des réseaux de stations radios conformes à un protocole de téléphonie de troisième génération, par exemple la norme UMTS (abréviation bien connue de l'homme du métier de l'expression anglaise "Universal Mobile Télécommunication System"), mais aussi par des réseaux locaux filaires, par exemple conformes à une norme dite "Ethernet" IEEE 802.3 ou par des réseaux locaux sans fil, par exemple conformes à une norme dite "Wi-Fi" IEEE 802.11.

Un réseau auxiliaire peut en outre être matérialisé à l'échelle d'une habitation par un réseau local d'un type particulier dans lequel un dispositif d'interface, par exemple une passerelle domestique, matérialise une jonction entre les réseaux principal et auxiliaire et est physiquement connecté à une pluralité de terminaux tels un récepteur de télévision, un ordinateur personnel, un téléphone éventuellement muni d'une fonctionnalité vidéo, etc.

Dans l'état actuel de la technique, les dispositifs d'interface connus sont agencés de telle sorte que certains terminaux dits dédiés sont destinés à ne recevoir ou à émettre qu'un seul type de flux de données, par exemple un flux de données représentatives d'une oeuvre télévisuelle pour un récepteur de télévision. Pour faire en sorte qu'un tel terminal dédié puisse recevoir un flux de données d'un autre type, dans une hypothèse où il serait plus avantageux d'utiliser ce terminal dédié pour restituer le stimulus concerné, un utilisateur du réseau auxiliaire devra, si cela est matériellement possible, établir une dérivation entre le terminal dédié et un terminal initial considéré par l'utilisateur comme étant moins apte que le terminal dédié à restituer le stimulus concerné. Pour reprendre l'exemple où le terminal dédié est un téléviseur, le terminal initial pourra être matérialisé par un visiophone muni d'un écran de taille réduite et donc moins avantageux que l'écran dont est muni le récepteur de télévision.

Ainsi, pour partager ou transférer un flux depuis un terminal vers un autre, un utilisateur du réseau auxiliaire devra établir entre ces terminaux une connexion physique se traduisant par un investissement en temps et en matériel et résultant en une présence dans son environnement d'un câble généralement disgracieux, laquelle présence devant de surcroît être permanente pour autoriser une commande dynamique de partage ou de transfert de flux. Le document D1: US 2004/057449 A1 (BLACK PETER J) 25 mars 2004 (2004-03-25) décrit une sélection d'un terminal possédant des caractéristiques qui le rend apte à rendre des données reçues.

La présente invention offre une solution qui ne présente pas ces inconvénients en proposant un procédé de transmission de données autorisant une commande dynamique d'un partage ou d'un transfert de flux entre au moins deux terminaux, procédé dont la mise en oeuvre ne nécessite l'établissement d'aucune connexion de dérivation entre lesdits terminaux.

En effet, selon l'invention, un procédé conforme à la revendication 1, un système conforme à la revendication 7, un programme d'ordinateur conforme à la revendication 9 et un support de données conforme à la revendication 10 sont enseignés.

Dans le procédé conforme à l'invention, une commande d'un partage ou d'un transfert de flux entre un terminal initial et un nouveau terminal destinataire aboutira à l'établissement d'une transmission dudit flux depuis le dispositif d'interface et non depuis le terminal initial, de sorte qu'aucune liaison de dérivation n'est requise entre lesdits terminaux. Ceci autorise une gestion totalement dynamique de partages et de transferts de flux de n'importe quel type, qui prend une dimension supplémentaire grâce à l'étape de sélection au cours de laquelle non plus un seul mais plusieurs terminaux sont retenus en tant que potentiellement destinataires d'un flux déterminé.

Selon une première variante de l'invention, le terminal initial et le nouveau terminal destinataire seront, après exécution de la deuxième étape de transmission, simultanément destinataires du flux déterminé.

Cette première variante permet de réaliser un partage en dupliquant en quelque sorte le flux déterminé en vue de permettre une restitution simultanée, sur deux terminaux distincts, de stimuli véhiculés par ce flux. Une telle possibilité est intéressante pour un utilisateur lorsqu'il est par exemple amené à se déplacer, en cours de transmission du flux déterminé, d'une pièce où se trouve le terminal initial vers une autre pièce où se trouve le nouveau termina! destinataire. Dans une telle hypothèse, la duplication du flux déterminé lui permet d'éviter une interruption de perception des stimuli véhiculés par le flux dupliqué. Cette possibilité est également intéressante dans une hypothèse où un utilisateur du terminal initial souhaite qu'un autre utilisateur, situé par exemple dans une pièce distincte, reçoive lui aussi les stimuli véhiculés par le flux déterminé.

Selon une deuxième variante de l'invention, la transmission du flux déterminé vers le terminal initial sera interrompue après exécution de la deuxième étape de transmission.

Cette deuxième variante permet d'exécuter un simple transfert depuis le terminal initial vers le terminal destinataire. Un tel mode de mise en oeuvre est par exemple avantageux pour prévenir une diffusion de certains flux dans des conditions qui porteraient atteinte à des droits patrimoniaux attachés à ces flux. Ainsi, il pourra n'avoir été attribué une licence d'accès à un contenu véhiculé par un flux déterminé qu'à un seul des utilisateurs possibles du réseau auxiliaire, de sorte que seul un transfert, et non un partage, peut garantir que les termes de la licence seront respectés tout en rendant possible un changement de terminal pour l'utilisateur concerné.

Le flux déterminé pourra lui-même véhiculer des informations représentatives d'autorisations de mise en oeuvre des premier et/ou deuxième modes de mise en oeuvre décrits ci-dessus, l'un de ceux-ci pouvant en outre avoir été préalablement choisi comme celui devant être utilisé par défaut.

Les première et deuxième variantes décrites ci-dessus ne sont pas mutuellement exclusives dans l'absolu, car il pourra advenir qu'un utilisateur choisisse dans un premier temps de dupliquer le flux déterminé et décide ultérieurement de supprimer la transmission de ce flux vers le terminal initial.

Dans un mode de mise en oeuvre particulier de l'invention, l'étape d'identification inclut une étape de génération d'une liste de terminaux offrant des ressources disponibles en quantité suffisante pour restituer effectivement les stimuli véhiculées par le flux déterminé.

Le mode de mise en oeuvre prévu ci-dessus permet d'identifier, en tant que terminaux compatibles, ceux des terminaux du réseau auxiliaire qui offrent, outre des caractéristiques techniques intrinsèques les rendant adaptés à la restitution des stimuli véhiculés par le flux déterminé, des ressources suffisantes pour restituer lesdits stimuli à l'instant considéré. Ce mode de mise en oeuvre permet donc d'optimiser la commande dynamique des partages et des transferts de flux rendue possible par l'invention, en prenant en compte en temps réel les conditions de fonctionnement du réseau auxiliaire.

Dans un mode de mise en oeuvre avantageux de l'invention, un procédé tel que décrit plus haut inclut en outre une étape de recensement de flux parmi lesquels le flux déterminé est destiné à être choisi.

Une telle étape de recensement permet de produire à un utilisateur du réseau auxiliaire une liste de flux potentiellement candidats à un partage ou à un transfert vers un autre terminal que leur terminal destinataire courant. Ceci confère à l'invention une grande flexibilité d'application, puisqu'un utilisateur pourra choisir en tant que flux déterminé n'importe lequel des flux inscrits sur la liste produite par l'étape de recensement.

Parmi de multiples modes de réalisation possibles, la deuxième étape d'établissement inclut une étape d'invitation au cours de laquelle un terminal distant émetteur du flux déterminé est invité à entrer en communication avec le deuxième terminal.

L'étape d'établissement pourrait être réalisée par simple recopie des données véhiculées par le flux déterminé en cas de partage, ou par simple ré-aiguillage par paramétrage d'un démultiplexage en cas de transfert dudit flux déterminé. Cependant, dans de tels modes de réalisation, le flux conservera ses propriétés intrinsèques, par exemple en termes de débit, alors que l'étape d'invitation permet de proposer au dispositif émetteur de modifier ces propriétés à l'émission pour rendre le flux résultant plus facile à traiter par le nouveau terminal destinataire. De plus, l'étape d'invitation permettra dans certains cas de susciter une transmission supplémentaire de flux d'un type différent, qui n'était pas antérieurement transmis au terminal initial, par exemple un flux vidéo qui serait envoyé vers le nouveau terminal destinataire, par exemple un poste de télévision, en complément d'un flux audio dans une hypothèse où le terminal initial, par exemple un combiné téléphonique, n'aurait reçu que ledit flux audio, le nouveau terminal destinataire pouvant alors restituer alors une vidéoconférence au lieu d'une simple conversation téléphonique.

l'invention sera mieux comprise à l'aide de la description suivante, faite à titre d'exemple non-limitatif et en regard des dessins annexés, dans lesquels :
- la figure 1 est un schéma fonctionnel décrivant un système de télécommunication dans lequel la présente l'invention est mise en oeuvre, et
- la figure 2 est un diagramme de flux de communication illustrant un échange de signaux se produisant dans un tel système.

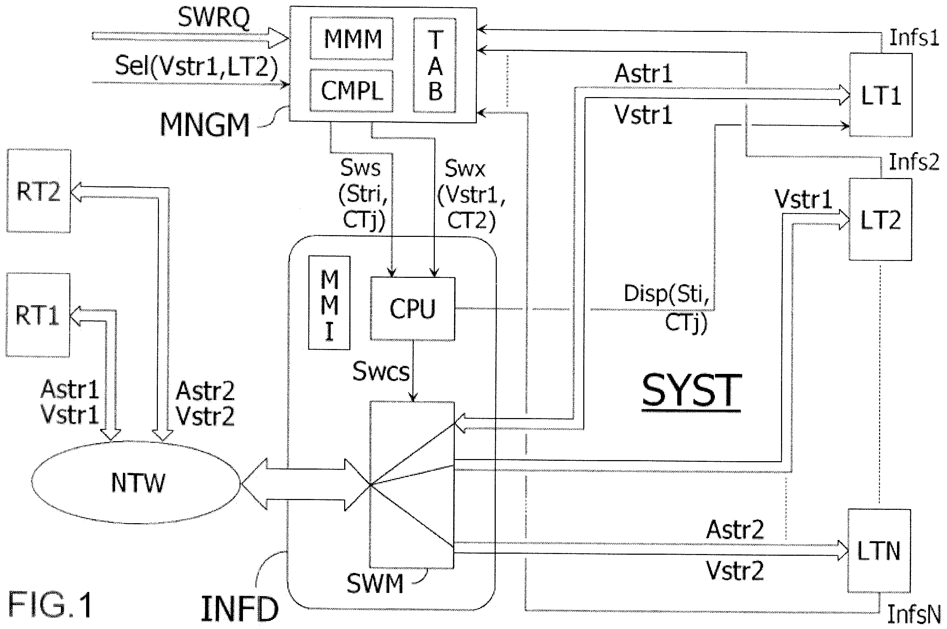

La figure 1 représente schématiquement un système de transmission de données SYST incluant, d'une part, un réseau de communication principal NTW, par exemple un réseau maillé compatible avec le protocole Internet, et, d'autre part, un réseau auxiliaire formé par un dispositif d'interface INFD connecté à une pluralité de terminaux locaux LT1, LT2...LTN. Dans l'exemple représenté ici, un premier terminal distant RT1 échange avec un premier terminal local LT1, *via* le réseau principal NTW et le dispositif d'interface NTW, un premier ensemble de flux de données audio/vidéo qui est représentatif du déroulement d'une visioconférence et incluant un premier flux audio Astr1 et un premier flux vidéo Vstr1. Ainsi, dans l'exemple représenté ici, le terminal local LT1 aura été préalablement sélectionné comme destinataire initial des premiers flux audio et vidéo Astr1 et Vstr1. Dans le présent exemple, un deuxième terminal RT2 distant émet en outre vers un autre terminal local LTN un deuxième ensemble de flux de données audio/vidéo, lequel ensemble est ici représentatif d'un programme télévisuel non-interactif et inclut un deuxième flux audio Astr2 et un deuxième flux vidéo Vstr2.

Le système de transmission SYST conforme à l'invention inclut en outre un module de gestion MNGM qui est connecté aux différents terminaux locaux LT1, LT2...LTN en vue de recevoir de leur part des signaux d'informations Infs1, Infs2...InfsN par lesquels les terminaux locaux LT1, LT2...LTN communiquent au module de gestion MNGM de manière dynamique, et autant que possible en temps réel, leurs conditions de fonctionnement courantes, par exemple un débit de communication ou encore un volume de calculs par seconde qu'ils sont encore individuellement aptes à gérer à l'instant considéré.

Le module de gestion MNGM inclut des moyens d'identification, pour au moins un flux déterminé, d'au moins un terminal apte à restituer des stimuli du type associé au format dudit flux déterminé, les moyens d'identification comprenant dans cet exemple de réalisation une table de mémorisation TAB des informations émises par les terminaux locaux LT1, LT2...LTN aux moyen de leurs signaux d'informations Infs1, Infs2...InfsN, ainsi qu'une unité de compilation CMPL de ces informations, qui est destinée à générer, pour chaque flux dont un partage ou un transfert est envisageable, une liste de terminaux CTj offrant des ressources disponibles en quantité suffisante pour restituer effectivement les stimuli véhiculées par le flux déterminé, lesdits terminaux CTj étant alors considérés comme compatibles avec le flux considéré.

Il doit être souligné ici que, bien que dans l'exemple de réalisation décrit ici, le module de gestion MNGM est représenté comme physiquement séparé du dispositif d'interface INFD, ce module de gestion MNGM pourra avantageusement être intégré au sein même du dispositif d'interface dans d'autres modes de réalisation de l'invention. *A contrario,* ce module de gestion pourra être réalisé sous forme totalement distribuée en en répartissant les fonctionnalités entre différents terminaux locaux et éventuellement le dispositif d'interface INFD.

Le système de transmission SYST selon l'invention inclut en outre des moyens de sélection, en tant que nouveau terminal destinataire d'un flux déterminé, d'au moins un terminal identifié comme compatible. Dans l'exemple de réalisation représenté ici, les moyens de sélection sont distribués dans divers éléments du système SYST. En effet, ces moyens de sélection intègrent, d'une part, certains éléments d'interfaces hommes/machine non représentés ici et permettant à un utilisateur d'un terminal d'interagir, au travers ce terminal, avec le dispositif d'interface.

Ainsi, pour qu'un utilisateur du réseau local puisse signifier par un signal de requête de changement SWRQ qu'il souhaite opérer un partage ou un transfert de flux, par exemple pour faire en sorte que les images de la visioconférence restituée par le premier terminal local LT1 soient également affichées sur un deuxième terminal local LT2, il doit disposer d'un moyen technique pour formuler cette requête, par exemple matérialisé par un ensemble interface graphique/souris lui permettant d'établir une liaison indirecte avec le module de gestion MNGM, *via* un terminal local formé par un ordinateur personnel, le moyen pour formuler une requête pouvant encore être matérialisé par une télécommande permettant à l'utilisateur d'établir une liaison directe avec le module de gestion MNGM ou indirecte *via* un menu déroulant affiché sur l'un des terminaux locaux, par exemple un téléviseur.

Les moyens de sélection peuvent également inclure une unité centrale CPU, située ici dans le dispositif d'interface INFD et destinés à recevoir de la part du module de gestion MNGM un signal de commande Sws(Stri,CTj) par lequel le module de gestion MNGM informe le dispositif d'interface INFD qu'une requête de changement SWRQ a été émise par un utilisateur, dans cet exemple l'utilisateur du terminal local LT1, le signal de commande ordonnant à l'unité centrale CPU de transmettre un message d'affichage Disp(Stri,CTj) destiné à provoquer un affichage sur un écran du terminal local LT1 d'une liste de flux Stri pouvant faire l'objet d'un partage ou d'un transfert, et une ou plusieurs listes de terminaux CTj identifiés comme compatibles avec ces flux Stri. En réponse à un tel affichage, l'utilisateur produira un signal de sélection par lequel il identifiera le ou les flux qu'il souhaite faire partager ou transférer vers un ou plusieurs autres terminaux également identifiés par le signal de sélection. Dans le présent exemple, le signal de sélection est noté Sel(Vstr1,LT2) et identifie, en tant que flux prédéterminé à partager avec le deuxième terminal local LT2, le flux Vstr1 formant la composante vidéo du premier ensemble de flux véhiculant une visioconférence vers le premier terminal local LT1.

Après réception du signal de sélection Sel(Vstr1,LT2), l'unité de compilation CMPL génère un signal d'actionnement Swx(Vstr1,CT2) au moyen duquel le module de gestion MNGM ordonne à l'unité centrale CPU incluse dans le dispositif d'interface d'exécuter une deuxième étape de transmission du flux Vstr1 vers le deuxième terminal local LT2. L'unité centrale CPU produit alors à cet effet un signal de commande Swcs d'un module d'aiguillage SWM destiné à établir effectivement cette deuxième transmission, lequel module d'aiguillage SWM pourra notamment inclure pour ce faire des moyens de transmission au travers de ports d'entrée/sortie et une unité de gestion d'interconnexions entre lesdits ports.

Dans un mode de fonctionnement particulier du système de transmission SYST décrit ci-dessus, une ou plusieurs séquences d'identification et de sélection pourront avoir été préalablement mémorisées et être proposées sous forme synthétique à un utilisateur qui aura émis un signal de requête de changement SWRQ signifiant qu'il souhaite opérer un partage ou un transfert de flux. De telles propositions synthétiques pourront s'énoncer sous forme de choix que le module de gestion MNGM aura considéré comme réalistes en fonction du contenu des signaux d'information Infs1, Infs2...InfsN. Ainsi, si les ressources du deuxième terminal local LT2 s'avèrent compatibles avec la nature du flux vidéo Vstr1, le module de gestion MNGM pourra valider l'affichage d'un message de choix prédéfini de type "Basculement vidéo de LT1 vers LT2", affichage qui sera inhibé sinon. L'utilisateur n'aura ainsi qu'à formuler une approbation du contenu de ce message de choix pour que la séquence désignée par ledit message de choix soit exécutée conformément à la description qui précède. L'utilisateur sera ainsi dispensé d'une détermination au coup par coup du ou des flux concernés, ainsi que d'une recherche du ou des terminaux de destination. L'utilisateur sera également dispensé d'ordonner explicitement un partage ou un transfert du ou des flux concernés. En effet, toutes ces options auront été préalablement déterminées une fois pour toutes lorsque la séquence désignée par le message prédéfini a été mémorisée.

En vue de mettre en oeuvre les étapes d'identification et de sélection décrites ci-dessus, à l'issue desquelles les moyens d'identification et de sélection produisent dans cet exemple les signaux Sws(Stri,CTj) et Swcs, lesdits moyens d'identification et de sélection sont pilotés par des séries d'instructions de code de programme inscrites sur des supports mémoire MMM et MMI, par exemple des modules SDRAM (abréviation connue de l'homme du métier de l'expression anglaise "Synchronous Dynamic Random Access Memory") inclus dans le module de gestion MNGM et le dispositif d'interface INFD, respectivement, lesquelles séries d'instructions étant alors destinées à être exécutées par l'unité de compilation CMPL et l'unité centrale CPU.

Il est à noter que le dispositif d'interface INFD pourra inclure des moyens de transcodage, destinés à traduire un flux de données qui le traverse d'un format à un autre en vue d'adapter le format de ce flux au type du terminal auquel ledit flux est destiné, afin d'exploiter de manière optimale les ressources offertes par ce terminal. Ainsi, un flux vidéo Vstr1 qui aurait initialement été encodé selon un format H.263 compatible avec des terminaux de type Camera Phone pourra être transcodé sur ordre du module de gestion MNGM en un format MPEG4 compatible avec un nouveau terminal destinataire de type téléviseur. Ces moyens de transcodage pourront mettre en oeuvre l'unité centrale CPU agissant en coopération avec un support mémoire MMI dans lequel auront été préalablement mémorisés divers programmes de transcodage.

En outre, dans une hypothèse non-représentée ici où le module de gestion MNGM inclurait lui-même des moyens de sélection et de transmission qui lui permettraient en quelque sorte de court-circuiter le dispositif d'interface INFD, et constituerait alors en quelque sorte un dispositif d'interface auxiliaire audit dispositif d'interface INFD, ce module de gestion MNGM pourra transmettre vers le nouveau terminal destinataire des flux identifiés et sélectionnés par ledit module de gestion MNGM lui-même. Des moyens de transcodage tels ceux évoqués ci-dessus seront alors avantageusement inclus au sein même dudit module de gestion MNGM.

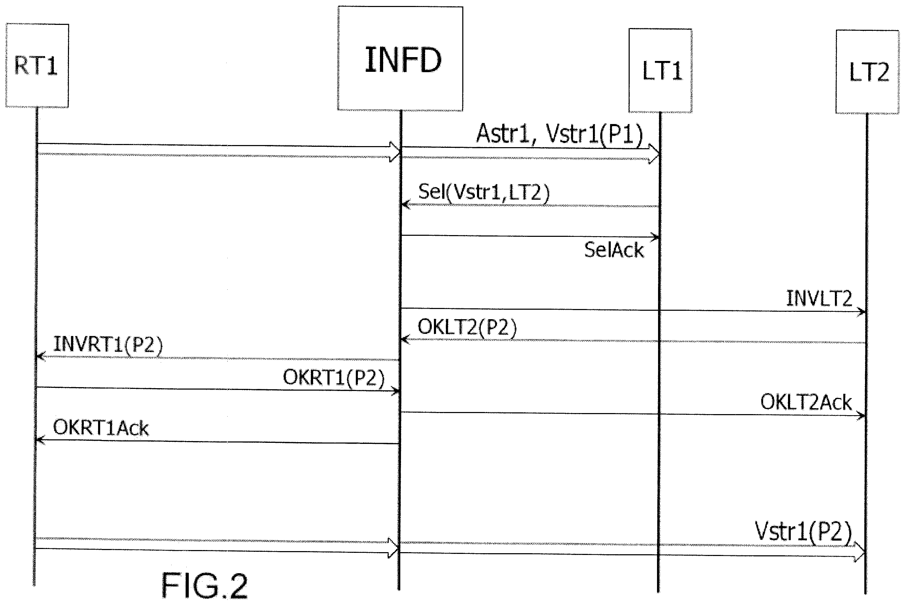

La figure 2 illustre, sous forme d'un diagramme de flux de communication, un mode d'implémentation particulier de la deuxième étape de transmission décrite ci-dessus, intervenant après une première étape de transmission au cours de laquelle un premier terminal local LT1 a été choisi comme destinataire initial d'un ensemble de flux audio Astr1 et Vstr1 émis par un terminal distant RT1. En vue de simplifier la compréhension de l'exposé, la description de ce mode particulier est faite dans une hypothèse où le module de gestion décrit plus haut est intégré dans le dispositif d'interface qui occupe ainsi une place centrale et incontournable dans les échanges entre terminaux locaux et distants. Dans d'autres modes de mise en oeuvre de l'invention, le module de gestion pourra organiser voire exécuter par lui-même, indépendamment du dispositif d'interface, les échanges de communication qui vont être à présent décrits.

Après avoir reçu un signal de requête de changement et exécuté une étape d'identification de terminaux compatibles, le dispositif d'interface INFD reçoit depuis le terminal local LT1 un signal de sélection identifiant le flux Vstr1 en tant que flux déterminé et le deuxième terminal local LT2en tant que nouveau destinataire dudit flux déterminé. Le dispositif d'interface INFD émet alors en retour un signal SelAck d'accusé de réception dudit signal de sélection, en suite de quoi le dispositif d'interface INFD exécute une première étape d'invitation en émettant un premier message d'invitation INVLT2 vers le deuxième terminal local LT2, qui répond à ce message d'invitation par un message d'acceptation OKLT2(P2) spécifiant au moins un paramètre P2 représentatif de propriétés intrinsèques que le deuxième terminal local souhaiterait voir attribuer au flux Vstr1, par exemple une valeur de débit qui rendrait le flux résultant plus facile à traiter par le nouveau terminal destinataire.

Au cours d'une deuxième étape d'invitation, le dispositif d'interface INFD invite ensuite au moyen d'un deuxième message d'invitation INVRT1(P2) le terminal distant RT1 à entrer en communication avec le deuxième terminal local LT2 afin de transmettre à ce dernier le flux Vstr1, le deuxième message d'invitation INVRT1(P2) incluant le ou les paramètres P2 représentatif de propriétés intrinsèques que le terminal distant RT1 doit attribuer au flux Vstr1 pour satisfaire aux conditions du deuxième terminal local LT2. Si, comme c'est le cas ici, ces conditions sont compatibles avec les conditions de fonctionnement du terminal distant RT1, celui-ci émet en retour un message d'acceptation OKRT1(P2), ensuite de quoi le dispositif d'interface INFD signale à son tour au deuxième terminal local LT2 et au terminal distant RT1 qu'il a bien reçu leurs messages d'acceptation et que la transmission du flux Vstr1(P2) muni de propriétés intrinsèques définies par le ou les paramètres P2 peut maintenant être exécutée.

La transmission depuis le terminal distant vers le deuxième terminal local pourra alors être établie soit directement entre lesdits terminaux, soit, comme c'est le cas ici, par l'intermédiaire du dispositif d'interface qui recevra le flux Vstr1(P2) sur un de ses ports d'entrée et ré-aiguillera ce flux sur un de ses ports de sortie qui se trouve connecté au deuxième terminal local LT2.

L'utilisateur du réseau local pourra ultérieurement décider d'interrompre la transmission du flux Vstr1(P1) qui avait initialement été établie vers le premier terminal local LT1 dans des conditions spécifiques représentées par un ou plusieurs paramètres P1 propres à cette transmission particulière.

## Revendications

1. Procédé de transmission de données représentatives d'au moins un stimulus d'au moins un type déterminé et incluses dans un flux conforme à un format associé audit type déterminé, lequel flux étant destiné à être reçu par un dispositif d'interface (INFD) connecté à une pluralité de terminaux (LT1-LTN), ledit procédé incluant une première étape d'établissement d'une transmission d'un flux déterminé, depuis le dispositif d'interface vers un terminal initial qui a été préalablement sélectionné comme destinataire parmi la pluralité de terminaux, le procédé étant **caractérisé en ce qu'**il inclut en outre au moins :
• une étape d'identification d'au moins un terminal dit compatible, distinct du terminal initial et apte à restituer des stimuli du type associé au format dudit flux déterminé, en fonction de signaux d'informations reçus de la pluralité de terminaux, lesdits signaux d'informations fournissant pour chaque terminal des données relatives aux conditions de fonctionnement courantes du terminal, lesdites condition incluant par exemple un débit de communication ou un volume de calculs par seconde que le terminal est encore individuellement apte à gérer à l'instant considéré ;
• une étape de sélection, en tant que nouveau terminal destinataire dudit flux déterminé, d'au moins un terminal identifié comme compatible ; et
• une deuxième étape d'établissement d'une transmission dudit flux déterminé nouveau terminal destinataire.

2. Procédé selon la revendication 1, **caractérisé en ce que** le terminal initial et le nouveau terminal destinataire sont, après exécution de la deuxième étape de transmission, simultanément destinataires du flux déterminé.

3. Procédé selon la revendication 1, **caractérisé en ce que** la transmission du flux déterminé vers le terminal initial est interrompue après exécution de la deuxième étape de transmission.

4. Procédé selon l'une des revendications 1 à 3, **caractérisé en ce que** l'étape d'identification inclut une étape de génération d'une liste de terminaux offrant des ressources disponibles en quantité suffisante pour restituer effectivement les stimuli véhiculées par le flux déterminé.

5. Procédé selon l'une des revendications 1 à 4, **caractérisé en ce qu'**il inclut en outre une étape de recensement de flux parmi lesquels le flux déterminé est destiné à être choisi.

6. Procédé selon l'une des revendications 1 à 5, **caractérisé en ce que** la deuxième étape d'établissement inclut une étape d'invitation au cours de laquelle un terminal distant émetteur du flux déterminé est invité à entrer en communication avec le deuxième terminal.

7. Système (INFD) de transmission de données représentatives d'au moins un stimulus d'au moins un type déterminé et incluses dans un flux conforme à un format associé audit type déterminé, système incluant un dispositif d'interface (INFD) connecté à une pluralité de terminaux (LT1-LTN) et apte à recevoir un flux déterminé et à transmettre ledit flux vers un terminal initial qui a été préalablement sélectionné comme destinataire parmi la pluralité de terminaux, système **caractérisé en ce qu'**il inclut en outre :
• des moyens d'identification d'au moins un terminal dit compatible, distinct du terminal initial et apte à restituer des stimuli du type associé au format dudit flux déterminé, en fonction de signaux d'informations reçus de la pluralité de terminaux, lesdits signaux d'informations fournissant pour chaque terminal des données relatives aux conditions de fonctionnement courantes du terminal, lesdites conditions incluant par exemple un débit de communication ou un volume de calculs par seconde que le terminal est encore individuellement apte à gérer à l'instant considéré ;
• des moyens de sélection, en tant que nouveau terminal destinataire dudit flux déterminé, d'au moins un terminal identifié comme compatible ; et
• des moyens d'établissement d'une transmission dudit flux déterminé vers ledit nouveau terminal destinataire.

8. Système selon la revendication 7, dans lequel lesdits moyens d'identification d'au moins un terminal, de sélection d'au moins un terminal, et d'établissement d'une transmission, sont inclus dans ledit dispositif d'interface.

9. Programme d'ordinateur incluant au moins une série d'instructions de code de programme pour l'exécution d'au moins une étape d'identification et/ou de sélection d'un procédé conforme à l'une des revendications 1 à 6 lorsque ledit programme est exécuté sur un ordinateur.

10. Support de données sur lequel a été mémorisée au moins une série d'instructions de code de programme pour l'exécution d'au moins une étape d'identification et/ou de sélection d'un procédé conforme à l'une des revendications 1 à 6.

## Patentansprüche

1. Verfahren zur Übertragung von Daten, die für wenigstens einen Stimulus wenigstens eines bestimmten Typs repräsentativ sind und in einem Strom enthalten sind, der mit einem dem bestimmten Typ zugeordneten Format übereinstimmt, wobei dieser Strom dazu bestimmt ist, von einer Schnittstellenvorrichtung (INFD) empfangen zu werden, die mit mehreren Endgeräten (LT1-LTN) verbunden ist, wobei das Verfahren einen ersten Schritt des Aufbaus einer Übertragung eines bestimmten Stroms von der Schnittstellenvorrichtung zu einem anfänglichen Endgerät, welches zuvor aus den mehreren Endgeräten als Adressat ausgewählt wurde, beinhaltet, wobei das Verfahren **dadurch gekennzeichnet ist, dass** es außerdem wenigstens beinhaltet:
• einen Schritt der Identifizierung wenigstens eines sogenannten kompatiblen Endgerätes, das von dem anfänglichen Endgerät verschieden ist und in der Lage ist, Stimuli des dem Format des bestimmten Stroms zugeordneten Typs wiederzugeben, in Abhängigkeit von Informationssignalen, die von den mehreren Endgeräten empfangen werden, wobei die Informationssignale für jedes Endgerät Daten liefern, die sich auf die aktuellen Betriebsbedingungen des Endgerätes beziehen, wobei diese Bedingungen beispielweise eine Kommunikationsrate oder ein Berechnungsvolumen pro Sekunde umfassen, die das Endgerät im betrachteten Moment noch individuell verwalten kann;
• einen Schritt der Auswahl, als neues Zielendgerät des bestimmten Stroms, wenigstens eines Endgerätes, das als kompatibel identifiziert wurde; und
• einen zweiten Schritt des Aufbaus einer Übertragung des bestimmten Stroms zu dem neuen Zielendgerät.

2. Verfahren nach Anspruch 1, **dadurch gekennzeichnet, dass** anfängliche Endgerät und das neue Zielendgerät nach Ausführung des zweiten Übertragungsschrittes gleichzeitig Adressaten des bestimmten Stroms sind.

3. Verfahren nach Anspruch 1, **dadurch gekennzeichnet, dass** die Übertragung des bestimmten Stroms zu dem anfänglichen Endgerät nach Ausführung des zweiten Übertragungsschrittes unterbrochen wird.

4. Verfahren nach einem der Ansprüche 1 bis 3, **dadurch gekennzeichnet, dass** der Identifizierungsschritt einen Schritt der Erzeugung einer Liste von Endgeräten beinhaltet, welche in ausreichender Menge verfügbare Ressourcen bieten, um die von dem bestimmten Strom transportierten Stimuli effektiv wiederzugeben.

5. Verfahren nach einem der Ansprüche 1 bis 4, **dadurch gekennzeichnet, dass** es außerdem einen Schritt der Erfassung von Strömen beinhaltet, aus denen der bestimmte Strom ausgewählt werden soll.

6. Verfahren nach einem der Ansprüche 1 bis 5, **dadurch gekennzeichnet, dass** der zweite Aufbauschritt einen Schritt einen Einladungsschritt beinhaltet, in welchem ein entferntes Endgerät, das den bestimmten Strom sendet, eingeladen wird, mit dem zweiten Endgerät in Verbindung zu treten.

7. System (INFD) zur Übertragung von Daten, die für wenigstens einen Stimulus wenigstens eines bestimmten Typs repräsentativ sind und in einem Strom enthalten sind, der mit einem dem bestimmten Typ zugeordneten Format übereinstimmt, wobei das System eine Schnittstellenvorrichtung (INFD) aufweist, die mit mehreren Endgeräten (LT1-LTN) verbunden ist und in der Lage ist, einen bestimmten Strom zu empfangen und diesen Strom zu einem anfänglichen Endgerät zu übertragen, welches zuvor aus den mehreren Endgeräten als Adressat ausgewählt wurde, wobei das System **dadurch gekennzeichnet ist, dass** es außerdem aufweist:
• Mittel zur Identifizierung wenigstens eines sogenannten kompatiblen Endgerätes, das von dem anfänglichen Endgerät verschieden ist und in der Lage ist, Stimuli des dem Format des bestimmten Stroms zugeordneten Typs wiederzugeben, in Abhängigkeit von Informationssignalen, die von den mehreren Endgeräten empfangen werden, wobei die Informationssignale für jedes Endgerät Daten liefern, die sich auf die aktuellen Betriebsbedingungen des Endgerätes beziehen, wobei diese Bedingungen beispielweise eine Kommunikationsrate oder ein Berechnungsvolumen pro Sekunde umfassen, die das Endgerät im betrachteten Moment noch individuell verwalten kann;
• Mittel zur Auswahl, als neues Zielendgerät des bestimmten Stroms, wenigstens eines Endgerätes, das als kompatibel identifiziert wurde; und
• Mittel zum Aufbau einer Übertragung des bestimmten Stroms zu dem neuen Zielendgerät.

8. System nach Anspruch 7, wobei die Mittel zur Identifizierung wenigstens eines Endgerätes, zur Auswahl wenigstens eines Endgerätes und zum Aufbau einer Übertragung in der Schnittstellenvorrichtung enthalten sind.

9. Computerprogramm, welches wenigstens eine Reihe von Programmcodeanweisungen zur Ausführung wenigstens eines Identifizierungs- und/oder Auswahlschrittes eines Verfahrens gemäß einem der Ansprüche 1 bis 6, wenn das Programm auf einem Computer ausgeführt wird, beinhaltet.

10. Datenträger, auf welchem wenigstens eine Reihe von Programmcodeanweisungen zur Ausführung wenigstens eines Identifizierungs- und/oder Auswahlschrittes eines Verfahrens gemäß einem der Ansprüche 1 bis 6 gespeichert ist.

## Claims

1. Method of transmitting data representative of at least one stimulus of at least one determined type and included in a stream that conforms to a format associated with said determined type, said stream being intended to be received by an interface device (INFD) connected to a plurality of terminals (LT1-LTN), said method including a first step of setting up a transmission of a determined stream, from the interface device to an initial terminal which has been previously selected as a destination among the plurality of terminals, the method being **characterized in that** it further includes at least:
• a step of identifying at least one "compatible" terminal, distinct from the initial terminal and capable of rendering stimuli of the type associated with the format of said determined stream, according to information signals received from the plurality of terminals, said information signals providing data for each terminal relating to the current operating conditions of the terminal, said conditions including for example one communication bit rate or a volume of calculations per second that the terminal is still individually able to manage at the moment considered;
• a step of selecting, as a new destination terminal of said determined stream, at least one terminal identified as compatible; and
• a second step of setting up a transmission of said determined stream to the new destination terminal.

2. Method according to Claim 1, **characterized in that** the initial terminal and the new destination terminal are, after execution of the second step of transmission, simultaneously destinations of the determined stream.

3. Method according to Claim 1, **characterized in that** the transmission of the determined stream to the initial terminal is interrupted after execution of the second step of transmission.

4. Method according to one of Claims 1 to 3, **characterized in that** the step of identifying includes a step of generating a list of terminals offering available resources in sufficient quantity for effectively rendering the stimuli conveyed by the determined stream.

5. Method according to one of Claims 1 to 4, **characterized in that** it further includes a step of taking inventory of streams among which the determined stream is intended to be chosen.

6. Method according to one of Claims 1 to 5, **characterized in that** the second step of setting up includes an invitation step during which a remote terminal transmitting the determined flow is invited to enter into communication with the second terminal.

7. System (INFD) for transmitting data representative of at least one stimulus of at least one determined type and included in a stream that conforms to a format associated with said determined type, the system including an interface device (INFD) connected to a plurality of terminals (LT1-LTN), and capable of receiving a determined stream and transmitting said stream to an initial terminal which has been previously selected as a destination among the plurality of terminals, the system **characterized in that** it further includes:
• means for identifying at least one "compatible" terminal, distinct from the initial terminal and capable of rendering stimuli of the type associated with the format of said determined stream, according to information signals received from the plurality of terminals, said information signals providing data for each terminal relating to the current operating conditions of the terminal, said conditions including for example one communication bit rate or a volume of calculations per second that the terminal is still individually able to manage at the moment considered;
• means for selecting, as a new destination terminal of said determined stream, at least one terminal identified as compatible; and
• means for setting up a transmission of said determined stream to said new destination terminal.

8. System according to Claim 7, wherein said means for identifying at least one terminal, selecting at least one terminal, and setting up a transmission, are included in said interface device.

9. Computer program including at least one series of program code instructions for executing at least one step of identifying and/or selecting in a method that conforms to one of Claims 1 to 6 when said program is executed on a computer.

10. Data medium storing at least one series of program code instructions for executing at least one step of identifying and/or selecting in a method that conforms to one of Claims 1 to 6.
